# EUROPEAN PATENT SPECIFICATION

(11) **EP 2 668 390 B1**
(45) Date of publication and mention of the grant of the patent: **26.11.2014**
(21) Application number: 12706683.5
(22) Date of filing: 26.01.2012
(51) Int. Cl.: F02M 21/02, F02D 19/02, F02D 19/06

(54) **SYSTEM FOR THE SUPPLY OF INTERNAL COMBUSTION ENGINES BY MEANS OF LIQUIFIED PETROLEUM GAS**
LPG-ZUFUHRSYSTEM VON BRENNKRAFTMASCHINEN
SYSTÈME D'ALIMENTATION EN GPL DE MOTEURS A COMBUSTION INTERNE AU MOYEN DE

(30) Priority: 27.01.2011 IT BO20110027
(43) Date of publication of application: 04.12.2013
(73) Proprietor: Brum S.r.l., 20121 Milano (IT)
(72) Inventor: CIACCINI, Marco, I-06019 Umbertide (Perugia) (IT)
(74) Representative: Dall'Olio, Christian
(86) International application number: PCT/IB2012/050368
(87) International publication number: WO 2012/101596

(56) References cited:
- WO-A1-2008/141390
- WO-A1-2010/121305
- DE-A1-102006 025 920
- NL-C2- 2 001 345

## Description

### FIELD OF THE INVENTION

The present invention relates to a supply system for internal combustion engines with liquefied petroleum gas (LPG), as an alternative to usual fuel.

### DESCRIPTION OF THE PRIOR ART

In the past, these systems were justified by the fact that they allowed savings with respect to use of petrol, which was much more expensive, including in terms of taxation.

For years, the main component of an LPG supply system was the pressure reducer-vaporiser. This enabled conversion of LPG from the liquid state to the gaseous state, with a suitable reduction of pressure, and supplied it to the aspirating conduits so that it could mix with air before entering the combustion chamber.

In practice the pressure reducer-vaporiser performed the function that in petrol supply was carried out by the carburettor, which in actual fact was inactive during gas supply.

Up to when Otto cycle engines continued with supply by carburettor, the "cohabitation" with an LPG supply system was simple, while it became considerably more complicated with the advent of electronic injection plants, either single-point or multi-point, as well as catalytic converters with their Lambda probes, destined to retroactively influence the parameters of injection and ignition.

Notwithstanding this, vehicles having double fuel supply continue to have a market, for reasons not only of saving but also due to the fact that the smaller environmental impact they have, given by the combustion of gas, gave rise to tax incentives and exemptions from limitation to circulation in urban centres, so even technically-dated vehicles can continue to circulate. Prior art examples are disclosed by WO 2008/141390 A1 and WO 2010/121305 A1.

As proof of this, consider the fact that while originally gas supply systems were installed exclusively by the owners of vehicles after buying them, often contrary to the manufacturers' advice, in recent years numerous car manufacturers have begun to offer, in their vehicle ranges, new cars already set up with double fuel supply.

Recently an LPG fuel system has been introduced to the market in which the LPG is injected into the combustion chamber in the liquid phase, instead of in the gaseous phase, as in the old-type systems.

The intention is to better control the supply parameters, meaning the load batching and supply timing, with the aim of optimising the functioning of the gas-fired engine so as to make it more compatible with the modern characteristics of engines.

In the above system, an electric pump is located internally of the gas cylinder, immersed in the liquid portion of the LPG, suitable for collecting the LPG and sending it, at an increased pressure by a predetermined gradient, towards an injection group provided with specific injectors for the gas, associated to the aspirating manifolds.

The first negative aspect relates to the safety of the plant, and derives from the position of the electric gas delivery pump, which is immersed in the gas, and with it a part of the electric cabling, with serious potential risk of explosion and the need to predisposed protections which, possibly, over time, might become inadequate.

A further drawback relates to the functioning of the engine, which is inconstant, in connection with the level of LPG in the gas cylinder; from the full condition in which the gas in the cylinder is at about 10 bar pressure, there is a drop to about 3 bar when the gas is almost used up.

As the increase in pressure given by the pump is fixed, there will be injection pressures at the injectors which can vary by 7 bar between one condition and another, so it is impossible to control the quantity of batched gas by acting on the injection times: it follows that for the functioning of LPG supply system it is necessary to take into consideration the fact that it is supplied at various pressures.

A further drawback is consequent upon the need to perforate the aspirating manifolds in order to apply gas injectors, and given the need to intervene on constantly-different elements, in very confined spaces, it becomes difficult to ensure a position and orientation of the gas injectors that can be considered optimal, with an inevitable drop in terms of performance.

It should also be pointed out that apart from the above-cited reasons, the best position that could be sought for the gas injectors is not possible for the simple reason that it is already occupied by the original petrol injectors, as established after considerable research and testing.

### SUMMARY OF THE INVENTION

The aim of the present invention is therefore to provide a system for alternative supply of internal combustion engines by means of liquefied petroleum gas (LPG), developed in such a way that the injection of the gas into the combustion chambers is done with the gas actually in the liquid state, thus guaranteeing a constant supply pressure, independent of the level of filling of the cylinder and thus of the pressure inside the cylinder.

A further aim of the invention is to provide a supply system of liquefied petroleum gas (LPG) which influences the gas parameters themselves (pressure, temperature, specific weight) and thus enables conversion of Otto or Diesel cycle internal combustion engines to LPG supply, and obtains performances that are comparable with those of the original fuel supply to the above engines, respectively supplied by petrol or diesel.

A further aim of the invention consists in providing a supply system conformed such as to provide maximum security against explosions, thus avoiding the dangers inherent in the prior art.

A further aim of the invention is to obtain a system which is capable of better integrating with the main supply plant, by exploiting various components thereof while at the same time being less "invasive" with respect to known systems, as well as being faster to install, whether mounted at the factory or subsequently.

A still further aim of the invention is to provide a system which thanks to its original characteristics can be adapted for engines having various functioning cycles.

The above aims are attained by a system for supplying internal combustion engines with liquefied petroleum gas (LPG), of a type suitable for flanking an original supply plant mounted in an internal combustion engine and comprising:
a tank for fuel;
a supply pump associated to a delivery pipe of the fuel drawn from the tank;
an injection apparatus constituted by at least an injection pump, suitable for receiving the fuel flowing through the pipe, and by at least an injector, suitable for dispensing batched quantities of the fuel, supplied by the injection pump, to cylinders of the internal combustion engine;
electronic control and command means, suitable for piloting functioning of the injection pump and the injector, according to predetermined parameters;
the system being characterized in that it comprises:
   a cylinder suitable for containing liquefied petroleum gas (LPG) under pressure;
   a first conduit suitable for enabling exit from the cylinder, of gas (LPG) in the liquid state, in consequence of an opening of first shut-off means associated to the first conduit;
   a sealed container, suitable for receiving internally thereof the gas (LPG) brought by the first conduit, and for maintaining the gas in a liquid state;
   a second conduit, suitable for enabling exit, from the sealed container, of gas (LPG) in the liquid state and for introducing the gas into the delivery pipe of the fuel, downstream of the supply pump of the original supply plant;
   a delivery pump, associated to the second conduit, suitable for increasing a pressure of the gas (LPG) in the liquid state by a predetermined gradient with respect to the pressure at which the gas is maintained internally of the container;
   first and second sensor means for detecting pressure values of the gas (LPG) in the liquid state, associated to the second conduit, respectively upstream and downstream of the delivery pump;
   second shut-off means, associated to the second conduit, downstream of the delivery pump, suitable for enabling or preventing a flow of the gas (LPG) towards the delivery pipe;
   third shut-off means, associated to the delivery pipe of the fuel, downstream of the supply pump and upstream with respect to a connection of the second conduit into the delivery pipe, which third shut-off means are suitable for enabling or preventing the flow of the fuel towards the injection apparatus;
   electronic management and control means, suitable for receiving the signals sent by the first and second sensor means and for activating, in a suitable phase relation: a timed and intermittent opening of the first shut-off means, for controlled inflow of gas (LPG) in the liquid state to the sealed container, such as to maintain the pressure thereof at a predetermined constant level; closure of the third shut-off means and deactivation of the supply pump; activation of the delivery pump and opening of the second shut-off means, for sending gas (LPG) in the liquid state, having a predetermined constant pressure, to the delivery pipe in place of the original fuel, the gas (LPG) being destined to supply the at least an injection pump and to be subsequently sprayed, still in the liquid state, from the at least an injector.

The above system enables obtaining all the above-indicated aims, starting from optimal safety against explosions given by the external position of the gas delivery pump, instead of the pump being dangerously immersed in the gas, as in the prior art.

The technical solution of the container downstream of the cylinder, internally of which the gas is gradually injected, is kept at a constant pressure, and enables uniform and constant supply pressure to be maintained independently of the amount of LPG in the cylinder and thus of the pressure inside the cylinder: this prevents generation of hammer effects in the pressures as the minimum pressure is 3 bar.

A constant liquid-state gas supply pressure clearly guarantees a homogeneous functioning of the engine that is not influenced by the quantity of residual gas present in the cylinder.

By exploiting the original injection plant for injecting the gas in the liquid state into the cylinders, the proposed system enables advantageously using the circuits of the series control unit and all the associated devices, thus optimizing consumption and emissions.

The above characteristic enables conversion to LPG supply not only of classic Otto-cycle engines, but also in diesel-cycle engines.

In the practical realization of the system of the invention, all those technical details suggested by experimentation and know-how in the sector will obviously be used, which are able to optimize the performance of the engine, for example in order to take account of the differences in specific weight, lower calorific power, temperature of self-ignition, etc., that exist between the gas (LPG) and the originally-destined fuel, either petrol or diesel.

Apart from the advantageous function aspects mentioned above, the system of the invention exhibits a small number of components to be housed in the engine compartment, which is nowadays very crowded, giving a significant saving in terms of installation time and complications.

### BRIEF DESCRIPTION OF THE DRAWINGS

The characteristics of the invention will become evident from the following description of a preferred embodiment of the supply system of the invention, according to what is set out in the claims and with the aid of the accompanying table of drawings, in which the system is schematically illustrated in association with the original engine supply plant.

### DESCRIPTION OF PREFERRED EMBODIMENTS

With reference to the cited figure, 100 denotes in its entirety the system for liquefied petroleum gas (LPG) supply of the present invention.

The system 100 is destined to flank the original supply plant provided in an internal combustion engine M, which can be Otto-cycle or Diesel-cycle.

The original supply plant comprises, amongst other things:
a tank S for fuel (petrol or diesel);
a supply pump Pa associated to a delivery pipe T of the fuel drawn from the tank S;
an injection apparatus A constituted by at least an injection pump Pi, suitable for receiving the fuel flowing through the delivery pipe T, and by at least an injector U, suitable for dispensing batched quantities of the fuel, supplied by the injection pump Pi, to cylinders of the internal combustion engine M;
electronic control and command means C, suitable for piloting functioning of the injection pump Pi and the injector U, according to predetermined parameters.

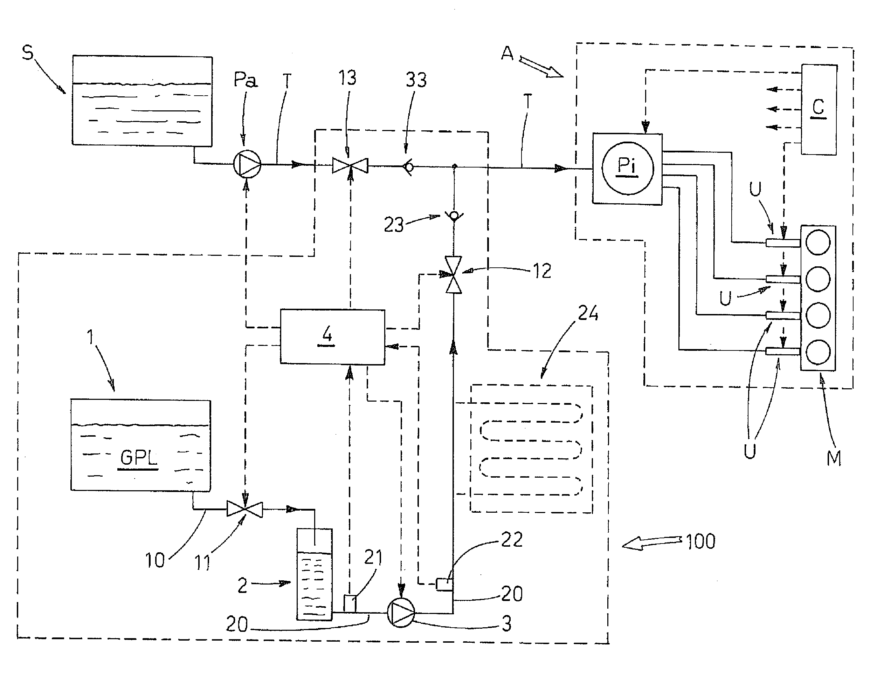

The injection apparatus A, illustrated by way of example in the figure, comprises a single injection pump Pi and an injector U for each cylinder, but apparatus of any other type can be provided from among those commonly used in Otto-cycle engines as well as Diesel-cycle engines.

In the prior art, in the original supply plant, downstream of the injection apparatus A, a fuel return circuit for the excess fuel delivered is provided, i.e. in excess of what was actually injected into the cylinders for the formation of the explosive mixture; this circuit, which can have various conformations, is not illustrated.

According to the invention, the system 100 comprises a cylinder 1 for containing liquefied petroleum gas (LPG), at a pressure which can vary from a maximum of about 10 bar, in full-tank condition, to a minimum of about 3 bar when the gas is nearly depleted.

A first conduit 10 emerges from the lower part of the cylinder 1, suitable for enabling exit of gas (LPG) in the liquid state, in phase relation with the opening of the first shut-off means 11, for example a solenoid valve, associated to the first conduit 10.

The first conduit 10 opens internally of a sealed container 2, for example of a cylindrical shape, to supply the gas (LPG) sourced from the cylinder 1.

The gas (LPG) is maintained in the liquid state in the sealed container 2, and at predetermined constant pressure (1.5 bars), but at a pressure that is in any case lower than the pressure at which the gas (LPG) is maintained in the cited cylinder 1, by controlling the inflow by intermittent opening of the first shut-off means 11, as will be more fully explained in the following.

A second conduit 20 emerges from the lower part of the sealed container 2, suitable for enabling the gas (LPG) in the liquid state to exit and enter a delivery pump 3, undergoing an increase in pressure by a predetermined gradient with respect to the pressure at which the gas (LPG) is maintained in the container 2.

By way of illustration, the increase in pressure conferred by the delivery pump 3 brings the gas (LPG) to about 3.5 to 5 bar, in the case of installation on Otto cycle engines, and about 1.5 to 12 bar for diesel engines: more precisely, 1,5 ÷3 bar for older-generation diesel engines and 10 ÷12 bar for latest-generation diesel engines.

Downstream of the delivery pump 3, the second conduit 20 extends such as to flow into the delivery conduit T of the fuel, downstream of the supply pump Pa of the original supply plant

First and second sensor means 21, 22 are included along the second conduit 20, for detecting the pressure and temperature values of the gas (LPG) in the liquid state, arranged respectively upstream and downstream of the delivery pump 3.

Second shut-off means 12 are present in the second conduit 20, for example a solenoid valve, located downstream of the first and second sensor means 21, 22 and the delivery pump 3, suitable for enabling or preventing the flow of the gas (LPG) towards the delivery pipe T.

According to a preferred constructional solution, a first one-way valve 23 is provided in the second conduit 20, downstream of the shut-off means 12, which one-way valve 23 is arranged such as to prevent the return of liquid towards the container 2.

A constructional variant of the system 100 provides for the presence of a heat exchanger 24 (indicated with broken lines), located in series with the second conduit 20, between the delivery pump 3 and the second shut-off means 12.

The above-mentioned heat exchanger 24 has the aim of reducing or increasing the temperature of the gas (LPG) before it enters either the supply pump Pa or the injectors directly: to this end the heat exchanger 24 can be coupled to a refrigeration system, not illustrated.

The pressure and temperature values of the gas (LPG) in the liquid state, at the exit of the heat exchanger 24, are controlled by the second sensor means 22, suitably located further downstream, or alternatively, additional sensor means (not shown) may be provided.

In the fuel delivery conduit T, downstream of the supply pump Pa and upstream of the junction of the second conduit 20, third shut-off means 13 are provided, also constituted, for example, by a respective solenoid valve, which are destined to enable or prevent the flow of the fuel to the injection apparatus A.

A second one-way valve 33 is preferably provided in the delivery pipe T, between the third shut-off means 13 and the entry of the second conduit 20, which second one-way valve 33 is so arranged as to prevent return of liquid towards the tank S.

A circuit for the return of the gas (LPG) not used by the injectors U is provided, for correct operation of the system 100. The gas-return circuit is specifically arranged in such a way as to integrate with the original circuit and is not illustrated as of known type to an expert in the sector; it does not influence the functioning of the system of the invention, and is present in some petrol-fuelled models and many diesel-fuelled models.

Electronic management and control means 4 are also provided in the system 100, which means receive the signals sent by the first and second sensor means 21, 22 and govern the operation of the above described components, as described in the following.

By operating a power switch, of known type and not illustrated, the vehicle driver starts up the system 100 to power the motor M with the gas (LPG).

On start-up, the following occurs, in suitable phase relationship:
a timed and intermittent opening of the first shut-off means 11, for controlled inflow of gas (LPG) in the liquid state to the sealed container 2, such as to maintain the pressure thereof at a predetermined constant level; the time and frequency of opening of the first shut-off means 11 enable maintaining a level of gas inside the container 2 that is almost constant, according to the consumption of the engine M;
closure of the third shut-off means 13 and deactivation of the supply pump Pa, for interrupting delivery of gas (LPG) coming from the tank S into the delivery tube T;
activation of the delivery pump 3 and opening of the second shut-off means 12, for sending gas (LPG) in the liquid state, to the injection pump Pi, from which the gas (LPG) in the liquid state, with duly increased pressure, is destined to be subsequently sprayed by the at least an injector U in order to supply the engine M, according to the parameters (injection time and timing) memorized in the respective electronic control and command means C and used also with the original fuel.

If the system 100 is equipped with the exchanger 24, the last-described step also includes activation of any refrigeration plant associated with the exchanger 24.

To restore functioning of the engine M with the original fuel, the same switch is operated, as in systems of known type.

The above is intended to be by way of non-limiting example, and any eventual modifications to detail or use of additional components aimed at improving the performance of the described system are considered to fall within the ambit of protection as defined in the following claims.

## Claims

1. A system for supplying internal combustion engines with liquefied petroleum gas (LPG) of a type destined to be flanked to an original supply plant, provided in an internal combustion engine (M) and comprising:
a tank (S) for fuel;
a supply pump (Pa) associated to a delivery pipe (T) of the fuel drawn from the tank (S);
an injection apparatus (A) constituted by at least an injection pump (Pi), suitable for receiving the fuel flowing through the pipe (T), and by at least an injector (U),
suitable for dispensing batched quantities of the fuel, supplied by the injection pump (Pi), to cylinders of the internal combustion engine (M);
electronic control and command means (C), suitable for piloting functioning of the injection pump (Pi) and the injector (U), according to predetermined parameters;
the system (100) being **characterized in that** it comprises:
a cylinder (1) suitable for containing liquefied petroleum gas (LPG) under pressure;
a first conduit (10) suitable for enabling exit from the cylinder (1), of gas (LPG) in the liquid state, in consequence of an opening of first shut-off means (11) associated to the first conduit (10);
a sealed container (2), suitable for receiving internally thereof the gas (LPG) brought by the first conduit (10), and for maintaining the gas in a liquid state;
a second conduit (20), suitable for enabling exit, from the sealed container (2), of gas (LPG) in the liquid state and for introducing the gas into the delivery pipe (T) of the fuel, downstream of the supply pump (Pa) of the original supply plant;
a delivery pump (3), associated to the second conduit (20), suitable for increasing a pressure of the gas (LPG) in the liquid state by a predetermined gradient with respect to the pressure at which the gas is maintained internally of the container (2);
first and second sensor means (21, 22) for detecting pressure values of the gas (LPG) in the liquid state, associated to the second conduit (20), respectively upstream and downstream of the delivery pump (3);
second shut-off means (12), associated to the second conduit (20), downstream of the delivery pump (3), suitable for enabling or preventing a flow of the gas (LPG) towards the delivery pipe (T);
third shut-off means (13), associated to the delivery pipe (T) of the fuel, downstream of the supply pump (Pa) and upstream with respect to a connection of the second conduit (20) into the delivery pipe (T), which third shut-off means (13) are suitable for enabling or preventing the flow of the fuel towards the injection apparatus (A);
electronic management and control means (4), suitable for receiving the signals sent by the first and second sensor means (21, 22) and for activating, in a suitable phase relation: a timed and intermittent opening of the first shut-off means (11), for controlled inflow of gas (LPG) in the liquid state to the sealed container (2), such as to maintain the pressure thereof at a predetermined constant level; closure of the third shut-off means (13) and deactivation of the supply pump (Pa); activation of the delivery pump (3) and opening of the second shut-off means (12), for sending gas (LPG) in the liquid state, having a predetermined constant pressure, to the delivery pipe (T) in place of the original fuel, the gas (LPG) being destined to supply the at least an injection pump (Pi) and to be subsequently sprayed, still in the liquid state, from the at least an injector (U).

2. The system of claim 1, **characterized in that** it comprises a heat exchanger (24), located in series on the second conduit (20) between the delivery pump (3) and the second shut-off means (12), and destined to reduce the temperature of the gas (LPG) before the gas enters the injection pump (Pa).

3. The system of claim 1, **characterized in that** the exchanger (24) is connected to a refrigeration plant.

4. The system of claim 1, **characterized in that** a first one-way valve (23) is located in the second conduit (20), downstream of the second shut-off means (12), which one-way valve (23) is arranged such as to prevent return of liquid towards the sealed container (2).

5. The system of claim 1, **characterized in that** a second one-way valve (33) is located in the delivery pipe (T), between the third shut-off means (13) and the connection of the second conduit (20), which second one-way valve (33) is arranged such as to prevent return of liquid towards the tank (S).

6. The system of claim 1, **characterized in that** the first and second sensor means (21, 22) are suitable for detecting the corresponding temperature values of the gas (LPG) in the liquid state.

## Patentansprüche

1. Zufuhrsystem für die Versorgung von Brennkraftmaschinen mit verflüssigtem Erdölgas (LPG - Liquefied Petroleum Gas), wobei das System von der Art ist, die zusätzlich zu einer ursprünglich in einem Verbrennungsmotor (M) vorgesehenen Kraftstoffversorgungsanlage eingebaut werden kann, und Folgendes beinhaltet:
einen Tank (S) für den Kraftstoff;
eine Kraftstoffzufuhrpumpe (Pa), die mit einer Zufuhrleitung (T) für den aus dem Tank (S) entnommenen Kraftstoff verbunden ist;
eine Einspritzvorrichtung (A), die aus zumindest einer Einspritzpumpe (Pi) besteht, die geeignet ist, den durch die Kraftstoffzufuhrleitung (T) strömenden Kraftstoff zu empfangen, und aus zumindest einer Einspritzdüse (U), die geeignet ist, bestimmte Mengen des von der Einspritzpumpe (Pi) zugeführten Kraftstoffes den Zylindern des Verbrennungsmotors (M) zuzumessen;
elektronische Kontroll- und Steuermittel (C), die geeignet sind, die Funktion der Einspritzpumpe (Pi) und der Einspritzdüse (U) gemäß vorbestimmter Parameter zu steuern;
wobei das System (100) **dadurch gekennzeichnet ist, dass** es Folgendes beinhaltet:
einen Zylinder (1), der für die Aufnahme von unter Druck stehendem verflüssigtem Erdölgas (LPG) geeignet ist;
eine erste Leitung (10), die geeignet ist, infolge der Öffnung erster Absperrmittel (11), die mit der ersten Leitung (10) verbunden sind, das Austreten von Gas (LPG) in flüssigem Zustand aus dem Zylinder (1) zu ermöglichen;
einen abgedichteten Behälter (2), der geeignet ist, in seinem Inneren das über die erste Leitung (10) zugeführte Gas (LPG) aufzunehmen und im flüssigen Zustand zu halten;
eine zweite Leitung (20), die geeignet ist, das Austreten von Gas (LPG) in flüssigem Zustand aus dem abgedichteten Behälter (2) zu ermöglichen und das Gas in die Kraftstoffzufuhrleitung (T) stromabwärts von der Kraftstoffzufuhrpumpe (Pa) der ursprünglichen Kraftstoffversorgungsanlage einzuleiten;
eine Förderpumpe (3), die mit der zweiten Leitung (20) verbunden und geeignet ist, den Druck des Gases (LPG) in flüssigem Zustand um einen vorbestimmten Gradienten relativ zu dem Druck zu erhöhen, auf dem das Gas im Inneren des Behälters (2) gehalten wird;
erste und zweite Fühlermittel (21, 22) zur Erfassung der Druckwerte des Gases (LPG) in flüssigem Zustand, die mit der zweiten Leitung (20) jeweils stromaufwärts beziehungsweise stromabwärts von der Förderpumpe (3) verbunden sind;
zweite Absperrmittel (12), die mit der zweiten Leitung (20) stromabwärts von der Förderpumpe (3) verbunden und geeignet sind, das Strömen des Gases (LPG) zur Kraftstoffzufuhrleitung (T) zu ermöglichen beziehungsweise zu verhindern;
dritte Absperrmittel (13), die mit der Kraftstoffzufuhrleitung (T) stromabwärts von der Kraftstoffzufuhrpumpe (Pa) und stromaufwärts relativ zu einem Anschluss der zweiten Leitung (20) in die Kraftstoffzufuhrleitung (T) verbunden sind, wobei diese dritten Absperrmittel (13) geeignet sind, das Strömen des Kraftstoffs zur Einspritzvorrichtung (A) zu ermöglichen beziehungsweise zu verhindern;
elektronische Leit- und Steuereinrichtungen (4), die geeignet sind, die von den ersten und
zweiten Fühlermitteln (21, 22) gesendeten Signale zu empfangen und in geeigneter Phasenbeziehung Folgendes zu aktivieren: zeitgesteuertes und intermittierendes Öffnen der ersten Absperrmittel (11) für das kontrollierte Einströmen von Gas (LPG) in flüssigem Zustand in den abgedichteten Behälter (2), um dessen Druck auf einem vorbestimmten konstanten Niveau zu halten; Schließen der dritten Absperrmittel (13) und
Deaktivieren der Kraftstoffzufuhrpumpe (Pa); Aktivieren der Förderpumpe (3) und
Öffnen der zweiten Absperrmittel (12), um das Gas (LPG) in flüssigem Zustand mit vorbestimmtem konstant gehaltenen Druck anstelle des ursprünglichen Kraftstoffs in die Kraftstoffzufuhrleitung (T) zu leiten, wobei das Gas (LPG) dafür bestimmt ist, die zumindest eine Einspritzpumpe (Pi) zu speisen und anschließend, immer noch im flüssigen Zustand, von der zumindest einen Einspritzdüse (U) eingespritzt zu werden.

2. System nach Anspruch 1, **dadurch gekennzeichnet, dass** es einen Wärmeübertrager (24) beinhaltet, der in Reihe auf der zweiten Leitung (20) zwischen der Förderpumpe (3) und den zweiten Absperrmitteln (12) angeordnet und dazu bestimmt ist, die Temperatur des Gases (LPG) zu verringern, bevor das Gas in die Einspritzpumpe (Pi) eintritt.

3. System nach Anspruch 1, **dadurch gekennzeichnet, dass** der Wärmeübertrager (24) an eine Kühlanlage angeschlossen ist.

4. System nach Anspruch 1, **dadurch gekennzeichnet, dass** ein erstes Einwegventil (23) in der zweiten Leitung (20) stromabwärts von den zweiten Absperrmitteln (12) angeordnet ist, wobei dieses Einwegventil (23) derart angeordnet ist, dass es das Zurückströmen von Flüssigkeit zum abgedichteten Behälter (2) verhindert.

5. System nach Anspruch 1, **dadurch gekennzeichnet, dass** ein zweites Einwegventil (33) in der Kraftstoffzufuhrleitung (T) zwischen den dritten Absperrmitteln (13) und dem Anschluss der zweiten Leitung (20) angeordnet ist, wobei das zweite Einwegventil (33) derart angeordnet ist, dass es das Zurückströmen von Flüssigkeit zum Tank (S) verhindert.

6. System nach Anspruch 1, **dadurch gekennzeichnet, dass** die ersten und zweiten Fühlermittel (21, 22) geeignet sind, die entsprechenden Temperaturwerte des Gases (LPG) in flüssigem Zustand zu erfassen.

## Revendications

1. Un système pour alimenter des moteurs à combustion interne avec du gaz de pétrole liquéfié (GPL) d'un type destiné à être associé à une installation d'alimentation originale, prévue dans un moteur à combustion interne (M) et comprenant :
un réservoir (S) pour le carburant ;
une pompe d'alimentation (Pa) associée à un tuyau (T) d'amenée du carburant soutiré du réservoir (S) ;
un appareil d'injection (A) constitué par au moins une pompe d'injection (Pi), destinée à recevoir le carburant s'écoulant à travers le tuyau (T), et par au moins un injecteur (U), destiné à distribuer des quantités dosées du carburant, alimenté par la pompe d'injection (Pi), aux cylindres du moteur à combustion interne (M) ;
des moyens électroniques de contrôle et de commande (C),
destinés à piloter le fonctionnement de la pompe d'injection (Pi) et de l'injecteur (U), selon des paramètres prédéfinis ;
le système (100) étant **caractérisé en ce qu'**il comprend :
une bouteille (1) destinée à contenir du gaz de pétrole liquéfié (GPL) sous pression ;
un premier conduit (10) destiné à permettre la sortie, de la bouteille (1), de gaz (GPL) à l'état liquide, suite à une ouverture de premiers moyens d'arrêt (11) associés au premier conduit (10) ;
un contenant étanche (2), destiné à recevoir à l'intérieur le gaz (GPL) amené par le premier conduit (10), et à maintenir ledit gaz à l'état liquide ;
un deuxième conduit (20), destiné à permettre la sortie, du contenant étanche (2), de gaz (GPL) à l'état liquide et à introduire ledit gaz dans le tuyau (T) d'amenée du carburant, en aval de la pompe d'alimentation (Pa) de l'installation d'alimentation originale ;
une pompe d'amenée (3), associée au deuxième conduit (20),
destinée à augmenter la pression du gaz (GPL) à l'état liquide d'un gradient prédéfini par rapport à la pression à laquelle le gaz est maintenu à l'intérieur du contenant (2) ;
des premiers et deuxièmes moyens capteurs (21, 22) pour détecter les valeurs de pression du gaz (GPL) à l'état liquide, associés au deuxième conduit (20), respectivement en amont et en aval de la pompe d'amenée (3) ;
des deuxièmes moyens d'arrêt (12), associés au deuxième conduit (20), en aval de la pompe d'amenée (3), destinés à permettre ou à empêcher le flux du gaz (GPL) vers le tuyau d'amenée (T) ;
des troisièmes moyens d'arrêt (13), associés au tuyau (T) d'amenée du carburant, en aval de la pompe d'alimentation (Pa) et en amont par rapport à un raccord du deuxième conduit (20) dans le tuyau d'amenée (T), lesdits troisièmes moyens d'arrêt (13) sont destinés à permettre ou à empêcher le flux du carburant vers l'appareil d'injection (A) ;
des moyens électroniques de gestion et de contrôle (4),
destinés à recevoir les signaux envoyés par les premiers et
deuxièmes moyens capteurs (21, 22) et à activer, selon une relation de phase adéquate : l'ouverture temporisée et
intermittente des premiers moyens d'arrêt (11), pour l'afflux contrôlé de gaz (GPL) à l'état liquide vers le contenant étanche (2), de manière à maintenir la pression de celui-ci à un niveau constant prédéfini ; la fermeture des troisièmes moyens d'arrêt (13) et la désactivation de la pompe d'alimentation (Pa) ; l'activation de la pompe d'amenée (3) et l'ouverture des deuxièmes moyens d'arrêt (12), pour l'envoi de gaz (GPL) à l'état liquide, ayant une pression constante prédéfinie, au tuyau d'amenée (T) au lieu du carburant original, le gaz (GPL) étant destiné à alimenter ladite au moins une pompe d'injection (Pi) et à être ensuite pulvérisé, encore à l'état liquide, par ledit au moins un injecteur (U).

2. Le système selon la revendication 1, **caractérisé en ce qu'**il comprend un échangeur de chaleur (24), situé en série sur le deuxième conduit (20) entre la pompe d'amenée (3) et les deuxièmes moyens d'arrêt (12), et destiné à réduire la température du gaz (GPL) avant que ledit gaz entre dans la pompe d'injection (Pi).

3. Le système selon la revendication 1, **caractérisé en ce que** l'échangeur (24) est relié à une installation frigorifique.

4. Le système selon la revendication 1, **caractérisé en ce qu'**une première soupape de non-retour (23) est située dans le deuxième conduit (20), en aval des deuxièmes moyens d'arrêt (12), ladite soupape de non-retour (23) est disposée de manière à empêcher le retour de liquide vers le contenant étanche (2).

5. Le système selon la revendication 1, **caractérisé en ce qu'**une deuxième soupape de non-retour (33) est située dans le tuyau d'amenée (T), entre les troisièmes moyens d'arrêt (13) et le raccord du deuxième conduit (20), ladite deuxième soupape de non-retour (33) est disposée de manière à empêcher le retour de liquide vers le réservoir (S).

6. Le système selon la revendication 1, **caractérisé en ce que** les premiers et deuxièmes moyens capteurs (21, 22) sont destinés à détecter les valeurs de température correspondantes du gaz (GPL) à l'état liquide.
